# EUROPEAN PATENT APPLICATION

(11) **EP 1 780 939 A1**
(43) Date of publication of application: **02.05.2007**
(21) Application number: 05300864.5
(22) Date of filing: 26.10.2005
(51) Int. Cl.: H04L 12/14, H04M 17/00, H04Q 7/38, H04M 15/00

(54) **Improvements in or relating to billing systems for communication systems**

(71) Applicant: Hewlett-Packard Development Company, L.P., Houston, TX 77070 (US)
(72) Inventor: Giraud, Armand, 38053, Grenoble Cedex 09 (FR)
(74) Representative: Franks, Adam Peter

(57) **Abstract**

According to one aspect of the present invention, there is provided a method, in a telecommunications system having a pre-pay billing system, of providing announcements to a subscriber terminal, the billing system being operable to debit the subscriber's account in response to a voice call and to generate messages to cause an audio announcement to be played to the subscriber terminal, the billing system being arranged to debit the subscriber's account for use of a data network through use of a voice call, the method comprising receiving the generated messages, determining the type of use being made of the data network, delivering an announcement to the subscriber terminal, the announcement being based on one or more intercepted message and the determined type of use.

## Description

The present invention relates generally to the field of telecommunications, and particularly to use of billing systems in telecommunication networks.

Billing systems used in telecommunication networks come essentially in two flavours: post-paid; and pre-paid billing. In post-paid billing, the cost of all chargeable calls made by a subscriber during a billable period is accumulated, and an invoice sent to the subscriber at the end of the billing period. In pre-paid billing, a subscriber maintains a credit balance in an account and the telephone network enables calls to be made by a subscriber whilst their account is in credit.

Generally speaking pre-paid billing systems are more complex in nature than post-paid billing systems, since pre-paid billing systems need to accurately update the balance of each subscriber's account in substantially real-time whilst calls are in progress. If at any time the subscriber's account balance runs out of credit any calls in progress are cut-off and no more calls may be made until the account is re-credited.

In traditional SS7 type telephony networks the billing is typically handled by an intelligent network (IN) billing system.

Until recently the majority of telephone networks, such as conventional plain old telephone systems (POTS) and early mobile telephone networks handled only voice calls and data over voice calls. Early IN billing systems were accordingly designed only to handle such calls.

As technology has evolved increasing numbers of telephony networks, especially mobile telephone networks, are now offering packet-based data network connectivity in addition to traditional voice-based calls.

However, early so-called 'legacy' billing systems designed for use with traditional voice and data over voice calls were not designed to enable the billing of use of packet-based data networks.

Network operators having legacy billing systems and wishing to offer packet-based data services are thus faced with a stark choice: change their legacy billing system to a new billing system that can bill both voice calls and packet-based data access; or be unable to offer data network access to their customers.

Neither of the above choices is particularly satisfactory. Changing an entire billing system for a modern billing system that can cope with the billing of both voice and packet-based data service is a costly exercise. Not offering access to packet-based data networks may put the operator at a significant commercial disadvantage as network subscribers are increasingly demanding access to data networks, and competing operators are likely to offer such services.

Recently developed techniques enable billing of non-voice calls to be performed by a legacy IN billing system. These techniques generate a simulated telephone call on behalf of the subscriber in response to the data usage, with the length of the simulated call and the billing rate applicable to the call being determined by the amount to be billed for the data usage. Such techniques may be used, for example, for the billing of SMS messages.

Such simulated calls generate IN signaling messages which are sent between a switch and an IN billing system, in the same manner as the IN messages which are exchanged between a switch and an IN billing system when a conventional telephone voice call is made. However, such a simulated call does not lead to the establishment of any trunk connectivity or voice path. Such a system is described in our co-pending European patent application EP05300352 which is incorporated herein, by reference, in its entirety.

However, one of the problems of using legacy IN billing systems to bill data usage is that a legacy billing system behaves as it would if it was being used to bill a voice call. Whilst, on the one hand, this is one of the reasons for using an existing legacy billing system, there are many situations where actions taken by the legacy billing system are inappropriate.

The current situation is, therefore, somewhat unacceptable.

Accordingly, one aim of the present invention is to overcome, or least alleviate, at least some of the above-mentioned problems.

According to a first aspect of the present invention, there is provided a method, in a telecommunications system having a pre-pay billing system, of providing announcements to a subscriber terminal, the billing system being operable to debit the subscriber's account in response to a voice call and to generate messages to cause an audio announcement to be played to the subscriber terminal, the billing system being arranged to debit the subscriber's account for use of a data network through use of a voice call. The method comprises receiving the generated messages, determining the type of use being made of the data network, delivering an announcement to the subscriber terminal, the announcement being based on one or more intercepted message and the determined type of use.

Advantageously, the method enables a legacy billing system to be used for the billing of use made of packet-based data networks whilst ensuring that any announcements generated by a legacy billing system are successfully delivered to a subscriber terminal, even where no voice connection exists with the subscriber terminal. This not only helps keep subscribers better informed of the state of their account balance but also helps prevent subscribers from being disconnected with no warning whilst using data services.

Suitably, the messages are generated in response to one or more predeterminable events.

Preferably the predeterminable events relate to the state of the subscriber's account balance.

Suitably, the step of determining the type of use comprises determining whether the use is one of Internet browsing or file transfer protocol download.

The step of delivering the announcement may be suitably arranged, where the determined use is Internet browsing, to deliver an announcement in the form of a page formatted in a mark-up language.

The step of delivering the announcement may be suitably arranged, where the determined use is Internet browsing, to deliver a universe resource indicator URI of an announcement.

The step of delivering the announcement may further comprise, where the determined use is file transfer protocol download, delivering an announcement in the form of at least one of an email message, a short message system SMS message, a multimedia system MMS message, a wireless application protocol WAP message.

According to a second aspect of the present invention, there is provided apparatus, for use in a telecommunications system having a pre-pay billing system, the billing system being operable to debit a subscriber's account in response to a voice call and to generate messages in response to one or more predeterminable events to cause an audio announcement to be played to a subscriber terminal, the billing system being arranged to debit the subscriber's account for use of a data network through use of a voice call. The apparatus comprises a gateway for receiving the messages, a data controller for determining the type of data use being made by the terminal, and an announcement generator for delivering an announcement based on one or more of the received messages and the determined type of use.

Suitably, the gateway is arranged to receive messages from the billing system intended for a mobile switching centre and/or an interactive voice response unit.

Suitably, the data controller is arranged to determine whether the type of data use is one of Internet browsing or file transfer protocol download.

The announcement generator may be arranged to deliver a page formatted in a mark-up language to the subscriber terminal where the determined use is Internet browsing.

The announcement generator may be arranged to deliver a universal resource indicator URI of an announcement.

The announcement may be in the form of at least one of an email message, a short message system SMS message, a multimedia system MMS message, a wireless application protocol WAP message, where the determined use is a file protocol transfer download.

According to a third aspect of the present invention, there is provided a method of operating a telecommunication system as described in the above steps.

According to a fourth aspect of the present invention, there is provided a telecommunication system including the apparatus described above.

Embodiments of the present invention will now be described, by way of nonlimiting example only, with reference to the accompanying diagrams, in which:
Figure 1 is a block diagram illustrating a simplified overview of a mobile telephony system according to the prior art;
Figure 2 is a message flow diagram outlining example messages that may flow between different elements of the system of Figure 1;
Figure 3 is a block diagram showing an overview of a simplified system according to one embodiment of the present invention;
Figure 4 is a message flow diagram outlining example messages that may flow between different elements of the system of Figure 3; and
Figure 5 is a flow diagram outlining example processing steps taken by elements of the system of Figure 3 according to one embodiment of the present invention.

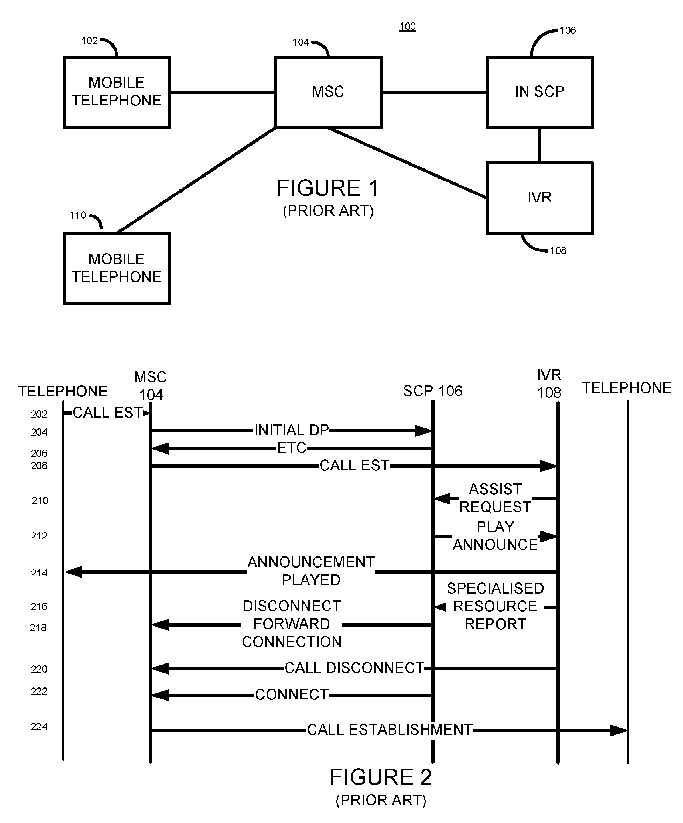

Referring now to Figure 1 there is a shown a simplified view of a mobile telephony system 100 according to the prior art. Those skilled in the art will appreciate that not all essential elements of such a system are shown. The operation of the system of Figure 1 is described below, with additional reference to Figure 2.

A mobile telephone 102 makes a call (message 202) to a mobile telephone 110 through a mobile switching centre (MSC) 104.

When the MSC 104 receives the call establishment request 202 the MSC 104 receives the telephone subscriber number of the mobile telephone 102 and determines that the mobile telephone 102 is associated with a pre-paid account. Prior to proceeding to connect the call the MSC 104 first obtains authorisation from the legacy-IN billing system that the caller 102 has sufficient credit to make the call.

The legacy IN billing system is provided by way of an IN service control platform (SCP) 106.

The MSC requests authorisation from the SCP 106 by sending an Initial Detection Point message (message 204) thereto. The InitialDP message contains the called party number from which the SCP 106 can determine the billable rate applicable to the call. The InitialDP message also contains the telephone subscriber number of the mobile telephone 102 which enables the SCP 106 to interrogate the balance of the caller's pre-pay account balance. If the subscriber's account has sufficient credit the billing system 106 responds with a connect message 222 which causes the MSC 104 to route the original call establishment request through to the destination telephone (message 224). The call is then established in the normal manner.

However, if the SCP 106 determines that the subscriber's account has an insufficient or low credit balance, the billing system is arranged to cause an audio announcement to be played to the mobile telephone 102, thereby alerting the user of this fact.

If an audio message is to be played to the mobile telephone 102 the SCP 106 sends an establish temporary connection (ETC) message 206 to the MSC 104. The ETC message includes the telephone subscriber number of an interactive voice response (IVR) module 108. On receiving the ETC message 206 the MSC 104 establishes a temporary connection with the IVR 108. When the IVR 108 accepts the temporary connection it does not know what message audio message to play, so sends an assist request message 210 to the billing system 106. The assist request message 210 includes a correlation number of the mobile telephone 102 to enable the SCP 106 to correlate the IN transaction coming from the IVR 108 with the IN transaction triggered initially. The SCP 106 will then use the call context to identify the subscriber and then determine the audio message which it wishes to be played to the mobile telephone 102. The billing system 106 responds to the IVR 108 with a play announcement message 212 which includes an identifier of the audio message to be played. The IVR 108 then plays the identified message 214 to the mobile telephone 102.

The audio message, for example, could indicate to the user that his account balance is insufficient or is low, and could enable the user, for example through use of a suitable voice application, to recharge his account to enable the original call to be connected.

In the present example the account is recharged as a result of the user of the mobile telephone 102 hearing the audio message and interacting with a suitable voice application on the IVR 108.

When the interaction with the IVR 108 is completed a specialised resource report (message 216) is sent to the billing system 106. The billing system 106 sends a disconnect forward connection message (218) to the MSC 104 which causes the temporary connection established with the IVR to be disconnected (220). If the subscriber's account balance now has sufficient credit to enable the initial call to be connected the billing system 106 sends a connect message 222 to the MSC 104 which signals to the MSC that the original call establishment request 202 can be routed to the destination mobile telephone 110, and the call can be connected in the usual manner.

Those skilled in the art will appreciate the above described example represents an IN interaction with an IVR in so-called direct mode. Those skilled in the art will appreciate that other modes of operation are also available, as described in the various IN standards and specification.

As previously mentioned, techniques have been developed which enable the billing of use of packet-based data services to made using legacy IN billing systems. In the event of a subscriber having a low or insufficient credit balance the legacy IN billing system will attempt to cause an audio announcement to be played to the subscriber through the subscriber's telephone. One of the major problems with this, however, is that if the subscriber is using a data service, such as browsing the Internet or downloading a file, there is no voice call connection to the subscriber's telephone. Hence, any audio announcements played by the IN billing system will not be heard by the subscriber which could result in the subscriber being either unable to use such data services, or could result in the subscriber being disconnected whilst using such services, in both cases without understanding why.

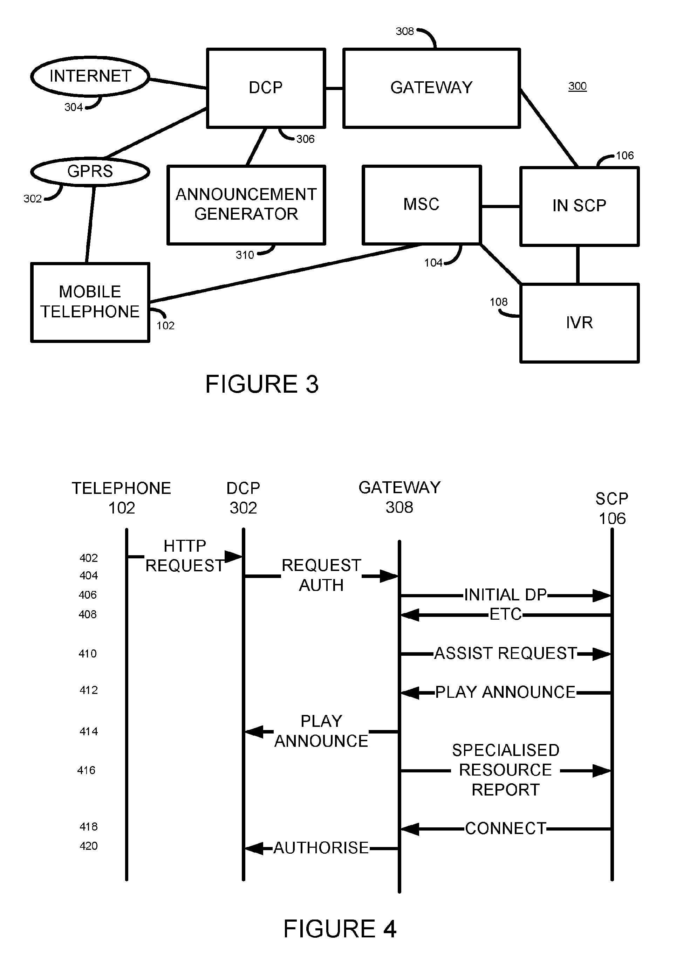

Referring now to Figure 3 there is shown an overview of a system according to one embodiment of the present invention. The system includes the system of Figure 1, with like references indicating like elements. In addition to the elements of Figure 1 is shown a general packet radio service (GPRS) wireless network 302 through which the mobile telephone 102 may connect to a computer network such as the Internet 304, an announcement generator 310, a data control point 306 and a gateway 308.

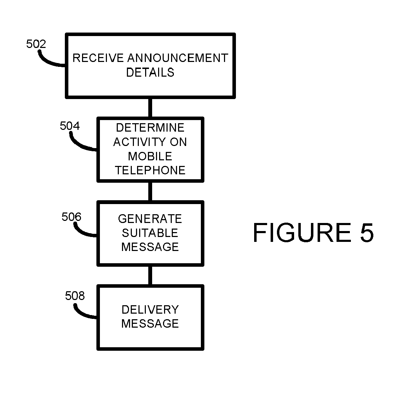

The operation of the embodiment is described below with further reference to Figure 4, which is a message flow diagram outlining example messages that may flow between different elements of the system of Figure 1 and Figure 5, which is a flow diagram outlining example processing steps taken by the system of Figure 3.

To connect to the Internet 304 the mobile telephone 102 sends, for example, a HTTP request 402 via the GPRS network 302 to DCP 306. Prior to routing the HTTP request 402 to the Internet 304 the DCP 306 checks whether the subscriber of the mobile telephone 102 has sufficient credit in his account by sending a request authorisation message 404 to the SCP 106.

As previously mentioned, the mechanism by which the billing for the use of the data network 302 is achieved is by simulating a voice call. In this way, use of the data network 302 may be billed using an existing legacy IN billing system, such as that provided by the SCP 106. Further details of such techniques can be found, for example in our co-pending European patent application EP05300352, which is incorporated herein, by reference, in its entirety.

The system of Figure 3 is arranged such that request authorisation message 404 is sent from the DCP 302 to the SCP 106 via the gateway 308. The gateway 308 is designed to appear to the billing system 106 as a mobile switching centre. This is important since the legacy billing system 106 only knows how to communicate with an MSC, and does not know how to communicate directly with the DCP 302. In response to receiving the request authorisation message 404 the gateway sends an initial detection point message 406 to the billing system 106. The initial detection point message 406 includes the telephone subscriber number of the mobile telephone 102 which enables the SCP 106 to determine whether the subscriber's account has sufficient balance to enable the data request 402 to be processed.

If sufficient credit is available in the subscriber's account, the SCP 106 responds with a connect message 418 which is sent to gateway 308. The gateway, in response thereto, sends an authorise message 420 to the DCP 302, causing the DCP 302 to authorise the data request 402, thereby enabling the user of the mobile telephone 102 to access the Internet 304.

If the SCP 106 determines that the subscriber's account does not have sufficient credit, the SCP 106 functions as previously described with reference to Figure 2. In other words, the SCP 106 does not know that the account authorisation request was generated in response to a request to use a packet-based data network rather than a call establishment request.

The SCP 106 thus responds, in the only way in which it knows how, which is to respond as if it is communicating with a mobile switching centre or an interactive voice response unit.

Thus, in response to the initial detection point message 406 the SCP 106 generates an establish temporary connection message 408 which is sent to the gateway 308. As in Figure 2, the ETC message 408 contains the telephone subscriber number of the IVR 108. However, instead of establishing a voice call to the IVR 108 the gateway 308 sends an assist request message 308 to the legacy IN billing system 106. The billing system 106 behaves as if the assist request message 308 was sent from an IVR, and responds with a play announcement message 412 identifying an audio message to be played to the user of the mobile telephone 102.

Since the user of the mobile telephone 102, however, is engaged in trying to access the data network 302 there is little point in trying to play a voice message to the user. In any case, current 2G and 2.5G mobile telephony systems do not enable concurrent use of both voice and data channels.

The gateway 308 sends a play announcement message 414 to the DCP 302, with the message containing details of the message to be played, or an identifier identifying the type of message to be played (step 502).

The DCP 306 determines the nature of the activity of the mobile telephone 102 (step 504). For example, in the present example the user of the mobile telephone has made a HTTP request. The DCP 306 can therefore reasonably assume that the HTTP request was received from an Internet browsing application running on the mobile telephone 102.

Once the nature of the activity has been established the DCP 306 forwards details of the play announcement message 414 and the determined type of activity to an announcement generator 310. The announcement generator 310 generates, in response thereto, an announcement in a suitable form for delivery to the user of the mobile telephone 102 (step 506).

For example, if the determined type of activity is Internet browsing, the announcement generator may generate a page formatted in a suitable mark-up language, such as xML or HTML, or a URI pointing to a pre-generated mark-up language page. The DCP can then forward either the generated page or a URI to the mobile telephone 102 via the GPRS network 302 to cause the generated page to be displayed on the Internet browser application that the user used to generate the initial HTTP request 402 (step 508).

For example, if the user has a low credit balance, the announcement generator may generate a HTML page which displays the user's account balance and which requires the user to click on an embedded hyperlink to continue with the original HTTP request 402.

If the user has an insufficient credit balance, the announcement generator may generate a HTML page which displays the user's account balance and also provides a link, such as a hyperlink, to a web application through which the user can recharge his account, for example by giving his credit card or pre-paid voucher number.

If the user recharges his account, the gateway 308 sends a specialised resource report message 416 to the legacy IN billing system 106, which in return sends an authorise message 418 authorising the HTTP request 402. The gateway 308 forwards this authorise message to the DCP 302 (message 320) which processes the HTTP request 402 thereby allowing the user of the mobile telephone 102 to access the request web page.

If the determine type of activity, however, indicates that it is not possible to deliver the announcement using the data network 302, an alternative announcement method is used to deliver the announcement. For example, if the determined type of activity is a file transfer protocol (FTP) download using an FTP client application it is unlikely that a suitable announcement could be generated that could be delivered to the subscriber terminal that would cause the FTP client application to display or suitably output the announcement.

Thus, in such cases an alternative form of announcement is required. For example, the announcement generator may send a short message system (SMS) message, using the mobile telephone network, to the mobile telephone 102 indicating that the user has a low or an insufficient account balance. Alternatively the announcement generator may send a wireless application protocol (WAP) message which provides a link to a WAP application server enabling the user to recharge his account. Other possibilities for generator announcements include generating and sending email announcements, multimedia messaging system (MMS) message announcements, and any other suitable format.

In addition to providing announcements when an initial request to use a data network is made, the present embodiment also enables announcements to be generated and sent to the user of the mobile telephone 102 at anytime. For example, if the legacy billing system 106 is arranged to generate mid-call announcements when a user's account balance falls below a predetermined threshold, or when the user runs out of credit, such announcements can also be handled by the announcement generator to generate a suitable announcement, in a similar manner to that described above, for example being triggered either by a play announcement message or an apply charging report message as appropriate.

Those skilled in the art will appreciate that the messages described herein are based on ITU messages for illustration only, although the message names used herein may not correspond exactly to any particular ITU messages. Other suitable message sets, such as ANSI messages, may be equally used as appropriate.

Advantageously, the above-described techniques are completely transparent to the billing system.

## Claims

1. A method, in a telecommunications system having a pre-pay billing system, of providing announcements to a subscriber terminal, the billing system being operable to debit the subscriber's account in response to a voice call and to generate messages to cause an audio announcement to be played to the subscriber terminal, the billing system being arranged to debit the subscriber's account for use of a data network through use of a voice call,
the method comprising:
receiving the generated messages;
determining the type of use being made of the data network; and
delivering an announcement to the subscriber terminal, the announcement being based on one or more intercepted message and the determined type of use.

2. The method of claim 1, the messages being generated in response to one or more predeterminable events

3. The method of claim 2, wherein the one or more predeterminable events relate to the state of the subscriber's account balance.

4. The method of claim 1, 2 or 3, wherein the step of determining the type of use comprises determining whether the use is one of Internet browsing, file transfer protocol download.

5. The method of claim 4, wherein the step of delivering the announcement further comprises, where the determined use is Internet browsing, delivering an announcement in the form of a page formatted in a mark-up language.

6. The method of claim 4, wherein the step of delivering the announcement comprises, where the determined use is Internet browsing, delivering a universe resource indicator URI of an announcement.

7. The method of claim 4, 5 or 6, wherein the step of delivering the announcement further comprises, where the determined use is file transfer protocol download, delivering an announcement in the form of at least one of an email message, a short message system SMS message, a multimedia system MMS message, a wireless application protocol WAP message.

8. Apparatus, for use in a telecommunications system having a pre-pay billing system, the billing system being operable to debit a subscriber's account in response to a voice call and to generate messages in response to one or more predeterminable events to cause an audio announcement to be played to a subscriber terminal, the billing system being arranged to debit the subscriber's account for use of a data network through use of a voice call, the apparatus comprising:
a gateway for receiving the messages;
a data controller for determining the type of data use being made by the terminal; and
an announcement generator for delivering an announcement based on one or more of the received messages and the determined type of use.

9. The apparatus of claim 8, wherein the gateway is arranged to receive message from the billing system intended for a mobile switching centre and/or an interactive voice response unit.

10. The apparatus of claim 8 or 9, wherein the data controller is arranged to determine whether the type of data use is one of Internet browsing or file transfer protocol download.

11. The apparatus of claim 10, wherein the announcement generator is arranged to deliver a page formatted in a mark-up language to the subscriber terminal, where the determined use is Internet browsing.

12. The apparatus of claim 10, wherein the announcement generator is arranged to deliver a universal resource indicator URI of an announcement, where the determined use is Internet browsing.

13. The apparatus of claim 10, wherein the announcement is in the form of at least one of an email message, a short message system SMS message, a multimedia system MMS message, a wireless application protocol WAP message, where the determined use is file transfer protocol download.

14. A method of operating a telecommunication system as claimed in any one of claims 1 to 7.

15. A telecommunication system including the apparatus as claimed in any one of claims 8 to 13.
